# EUROPEAN PATENT SPECIFICATION

(11) **EP 2 343 941 B1**
(45) Date of publication and mention of the grant of the patent: **16.09.2015**
(21) Application number: 09821540.3
(22) Date of filing: 18.08.2009
(51) Int. Cl.: H04W 72/04, H04W 76/06

(54) **METHOD AND BASE STATION FOR ADJUSTING PERSISTENT RESOURCE ALLOCATION**
VERFAHREN UND BASISSTATION ZUR ANPASSUNG VON PERMANENTER RESSOURCENZUWEISUNG
PROCÉDÉ ET STATION DE BASE POUR RÉGLER L'AFFECTATION DE RESSOURCES PERSISTANTES

(30) Priority: 23.10.2008 CN 200810171759
(43) Date of publication of application: 13.07.2011
(73) Proprietor: ZTE Corporation, Shenzhen, Guangdong 518057 (CN)
(72) Inventor: LU, Zhaohua, Guangdong 518057 (CN); LIU, Ying, Guangdong 518057 (CN); XIA, Wei, Guangdong 518057 (CN); QU, Hongyun, Guangdong 518057 (CN); WANG, Li, Guangdong 518057 (CN); LU, Kexue, Guangdong 518057 (CN)
(74) Representative: Ilgart, Jean-Christophe
(86) International application number: PCT/CN2009/073337
(87) International publication number: WO 2010/045819

(56) References cited:
- WO-A1-2006/130741
- WO-A1-2007/065272
- WO-A1-2007/133134
- WO-A1-2008/010676
- WO-A2-2009/051445
- CN-A- 1 719 930
- 'IEEE Standard for Local and metropolitan area networks Part 16: Air Interface for Broadband Wireless Access Systems' IEEE STD 802.16TM-2009, SECTIONS 6.3.26, 8.4.5, E 29 May 2009, XP017602116
- 'IEEE Standard for Local and metropolitan area networks Part 16: Air Interface for Fixed Broadband Wireless Access Systems' IEEE STD 802.16TM-2004, SECTIONS 6.3, 8.4, E 01 October 2004, XP017603700

## Description

### Field of the Invention

The present invention relates to the communication field, and in particular to a method and a base station for adjusting a persistent allocation of resource.

### Background of the Invention

In a wireless communication system, a base station is a device which provides services for terminal(s). The base station communicates with the terminal(s) via uplink(s)/downlink(s), wherein the downlink (the forward direction) is referred to as the direction from the base station to the terminal, and the uplink (the backward direction) is referred to as the direction from the terminal to the base station. A plurality of terminals can not only send data to the base station via the uplinks simultaneously, but also receive data from the base station via the downlinks simultaneously.

In a data transmission system which uses the base station to perform dispatching and control, the dispatching and allocation of the system resource are generally carried out by the base station, e.g. the resource allocation when the base station performs a downlink transmission and the resource allocation when the terminal performs an uplink transmission, and so on.

During the process for establishing IEEE 802 series standards, how to effectively reduce the control overhead of the wireless communication system so as to improve the throughput of the overall system is taken into consideration increasingly. The latest IEEE 802.16 standard Part 16: Air Interface for Broadband Wireless Access Systems issued in July, 2008 gives a relative description to the technology of the persistent allocation of resource. In general, the aim to use the technology of the persistent allocation of resource is to improve the performance of a system by saving the description overheads of a terminal's resource allocation which has a specified transmission cycle and a relatively persistent length of a data package. Generally, the allocation process may comprise the processes such as a message definition, a hole filling, a resource de-allocation, and a resource allocation, etc..

However, during the current use, the technology of the persistent allocation of the resource in the above-mentioned standard has redundant content in the message description during the process of the resource de-allocation, which thus results in the reduction of the efficiency of the system frequency spectrum.

For the problem in the related art that the efficiency of the system frequency spectrum is reduced during the process of the resource de-allocation due to the redundant content in the message description, no effective solution has put forward up to the present time.

Document WO 2006/130741 A1 discloses use of supplemental flag to decrement resources.

Document WO 2008/010676 A1 discloses a method for efficient persistent resource assignment in communication systems.

### Summary of the Invention

The present invention is proposed in consideration of the problem in the related art that the efficiency of the system frequency spectrum is reduced during the resource de-allocation due to the redundant content in the message description. Therefore, the main object of the present invention is to provide a mechanism for adjusting a persistent allocation of resource, so as to solve at least one of above problems in the related art.

A method for adjusting a persistent allocation of resource is provided according to one aspect of the present invention. The method is used in a wireless communication system which comprises a base station and a terminal.

The method for adjusting the persistent allocation of resource according to the present invention comprises: the base station sending a resource persistent allocation message to the terminal via a downlink channel, wherein the base station indicates a resource de-allocation by a resource allocation flag in the resource persistent allocation message, and indicates whether a resource hole filling is needed by the resource shifting indicator in the resource persistent allocation message, wherein under the circumstance that the resource hole filling is needed, the location of a de-allocated resource is carried in the resource persistent allocation message; and under the circumstance that no resource hole filling is needed, the identifier of the terminal is carried in the resource persistent allocation message.

Preferably, the method can also comprise: the terminal receiving the resource persistent allocation message sent by the base station, and judging whether the resource hole filling is needed according to the resource shifting indicator in the resource persistent allocation message;
wherein under the circumstance that the resource hole filling is needed, the terminal determines whether the de-allocated resource includes the resource allocated to the terminal in a mode of the persistent allocation of the resource according to the location of the de-allocated resource carried in the resource persistent allocation message, wherein if yes, the terminal stops using the resource allocated to the terminal; otherwise, the terminal continues to use the resource allocated to the terminal; and
under the circumstance that no resource hole filling is needed, the terminal judges whether the identifier carried in the resource persistent allocation message is the identifier of the terminal, wherein if yes, the terminal stops using the resource allocated to the terminal; otherwise, the terminal continues to use the resource allocated to the terminal.

Preferably, the processing that the base station carries the location of the de-allocated resource in the resource persistent allocation message comprises: the base station representing the location of the de-allocated resource via a slot offset and a duration, and carries the slot offset and the duration in the resource persistent allocation message.

Preferably, the processing that the terminal determines whether the de-allocated resource includes the resource allocated to the terminal in the mode of the persistent allocation of the resource according to the location of the de-allocated resource carried in the resource persistent allocation message comprises: the terminal determining whether the de-allocated resource includes the resource allocated to the terminal according to the slot offset and the duration.

Preferably, the base station sends the resource persistent allocation message in one of the following modes: broadcast, multicast, and unicast.

A method for adjusting a persistent allocation of resource is provided according to another aspect of the present invention. The method is used in a wireless communication system which comprises a base station and a terminal.

The method for adjusting the persistent allocation of resource according to the present invention comprises: the base station sending a resource persistent allocation message to the terminal via a downlink channel, wherein the base station indicates a resource de-allocation by a resource allocation flag in the resource persistent allocation message, and carries the location of the de-allocated resource in the resource persistent allocation message.

Preferably, the method may also comprise: the terminal determining whether the de-allocated resource includes the resource allocated to the terminal in a mode of the persistent allocation of the resource according to the location of the de-allocated resource carried in the resource persistent allocation message, wherein if yes, the terminal stops using the resource allocated to the terminal; otherwise, the terminal continues to use the resource allocated to the terminal.

Preferably, the processing that the base station carries the location of the de-allocated resource in the resource persistent allocation message comprises: the base station representing the location of the de-allocated resource via a slot offset and a duration, and carrying the slot offset and the duration in the resource persistent allocation message.

Preferably, the terminal determines whether the de-allocated resource includes the resource allocated to the terminal in a mode of the persistent allocation of resource according to the location of the de-allocated resource carried in the resource persistent allocation message comprises: the terminal determining whether the de-allocated resource includes the resource allocated to the terminal according to the slot offset and the duration.

Preferably, the base station sends the resource persistent allocation message in one of the following modes: broadcast, multicast, and unicast.

A method for adjusting a persistent allocation of resource is provided according to another aspect of the present invention. The method is used in a wireless communication system which comprises a base station and a terminal.

The method for adjusting the persistent allocation of resource according to the present invention comprises: the base station sending a resource persistent allocation message to the terminal via a downlink channel, wherein the base station indicates a resource de-allocation via a resource allocation flag in the resource persistent allocation message, indicates whether a resource hole filling is needed via a resource shifting indicator in the resource persistent allocation message, and carries a starting location of an allocated resource carried in the resource persistent allocation message, wherein under the circumstance that the resource hole filling is needed, a duration is carried in the resource persistent allocation message.

Preferably, the method may also comprise: the terminal receiving the resource persistent allocation message sent by the base station, and judging whether the starting location of the de-allocated resource is identical to the starting location of a resource allocated to the terminal in a mode of the persistent allocation of resource, wherein if yes, the terminal stops using the resource allocated to the terminal; otherwise, the terminal continues to use the resource allocated to the terminal.

Preferably, the processing that the base station carries the starting location of the de-allocated resource in the resource persistent allocation message comprises: the base station indicating the location of the de-allocated resource via a slot offset, and carrying the slot offset in the resource persistent allocation message.

Preferably, the processing that the terminal determines whether the de-allocated resource includes the resource allocated to the terminal in a mode of the persistent allocation of resource according to the location of the de-allocated resource carried in the resource persistent allocation message comprises: the terminal determining whether the starting location of the de-allocated resource is identical to that of the resource allocated to the terminal according to the slot offset.

Preferably, the base station sends the base station sends the resource persistent allocation message in one of the following modes: broadcast, multicast, and unicast.

A base station is provided according to another aspect of the present invention. The base station is used to perform a persistent allocation of resource to the terminal in a wireless communication system.

The base station according to the present invention comprises message configuration means and sending means, wherein the message configuration means is configured to indicate a resource de-allocation via carrying a resource allocation flag in a resource persistent allocation message, and to indicate whether a resource hole filling is needed via a resource shifting indicator in the resource persistent allocation message, wherein under the circumstance that the resource hole filling is needed, the location of de-allocated resource is carried in the resource persistent allocation message; and under the circumstance that no resource hole filling is needed, the identifier of the terminal is carried in the resource persistent allocation message; and
the sending means is configured to send the resource persistent allocation message to the terminal via a downlink channel.

A base station is provided according to another aspect of the present invention. The base station is used to perform a persistent allocation of resource to the terminal in a wireless communication system.

The base station according to the present invention comprises message configuration means and sending means, wherein the message configuration means is configured to indicate a resource de-allocation by carrying a resource allocation flag in a resource persistent allocation message, and to carry the location of de-allocated resource in the resource persistent allocation message; and
the sending means is configured to send the resource persistent allocation message to the terminal via a downlink channel.

A base station is provided according to another aspect of the present invention. The base station is used to perform a persistent allocation of resource to the terminal in a wireless communication system.

The base station according to the present invention comprises message configuration means and sending means, wherein the message configuration means is configured to indicate a resource de-allocation via carrying a resource allocation flag in a resource persistent allocation message, to indicate whether a resource hole filling is needed by a resource shifting indicator in the resource persistent allocation message, and to carry the starting location of an allocated resource in the resource persistent allocation message, wherein under the circumstance that the resource hole filling is needed, a duration is carried in the resource persistent allocation message; and
the sending means is configured to send the resource persistent allocation message to the terminal via a downlink channel.

By means of the above technical solution of the present invention, the information such as the terminal identifier become the optional carried information, by modifying the content carried in the resource persistent allocation message, so that the redundant content in the message is eliminated, the problem that the efficiency of the system frequency spectrum is reduced due to the redundant content in the message is avoided, system resources are saved, and the performances and the efficiency of the system frequency spectrum are improved.

### Brief Description of the Drawings

The drawings illustrated here provide a further understanding of the present invention and form a part of the present application. The exemplary embodiments and the description thereof are used to explain the present invention without unduly limiting the scope of the present invention, wherein:
Fig.1a is a flow chart for generating the Sub burst IE in the resource persistent allocation information elements by a base station in the method according to the first method embodiment of the present invention;
Fig.1b is a flow chart for parsing the Sub burst IE in the resource persistent allocation information elements by a terminal in a mode shown in Table 2 in the method according to the first method embodiment of the present invention;
Fig.2 is a structure block diagram of a base station according to the first device embodiment of the present invention;
Fig.3a is a flow chart for generating the Sub burst IE in the resource persistent allocation information elements by a base station in a mode shown in Table 3 in the method according to the second method embodiment of the present invention;
Fig.3b is a flow chart for parsing the Sub burst IE in the resource persistent allocation information elements by a terminal in a mode shown in Table 3 in the method according to the second method embodiment of the present invention;
Fig.4 is a structure block diagram of a base station according to the second device embodiment of the present invention;
Fig.5a is a flow chart for generating the Sub burst IE in the resource persistent allocation information elements by a base station in a mode shown in Table 4 in the method according to the third method embodiment of the present invention;
Fig.5b is a flow chart for parsing the Sub burst IE in the resource persistent allocation information elements by a terminal in a mode shown in Table 4 in the method according to the third method embodiment of the present invention; and
Fig.6 is a structure block diagram of a base station according to the third device embodiment of the present invention.

### Detailed Description of Embodiments

### Function Overview

In consideration of the problem in the related art that the efficiency of the system frequency spectrum is reduced during the resource de-allocation due to the redundant content in the message description, the present invention modifies the contents carried in the resource persistent allocation message, which ensures that the information such as the terminal identifier, a resource shifting indicator, and duration slot become optional carried information, so that the redundant content in the message is eliminated, and the problem that the efficiency of the system frequency spectrum is reduced due to the redundant content in the message is avoided.

Before the embodiment of the present invention is described in detail, part of the contents concerning the Sub burst IE in the resource persistent allocation information elements (Persistent HARQ MAP ALLOCATION IE) in the latest IEEE 802.16 standard Part 16: Air Interface for Broadband Wireless Access Systems issued in July, 2008 will be described first.

As shown in Table 1, during the resource de-allocation, a terminal identifier (RCID_IE()) has to be carried. In addition, in respect that the terminal which obtains resources in a mode of the persistent allocation of resource will store persistent allocation resource information which can be used by the terminal, the terminal can determine whether the terminal needs to stop using the resources previously obtained in the mode of the persistent allocation of resource by judging the location of the de-allocated resource, therefore, the terminal identifier (RCID_IE()) is redundant under the circumstance that resource shifting indicator =1. The present invention is put forward in consideration of the problem that the efficiency of the system frequency spectrum is low due to the redundant content in the message description.

**Table 1**

| Syntax | Size (bit) | Notes |
|---|---|---|
| N Sub burst | 4 | Number of sub-bursts in the 2D rectangular region is this field value plus 1 |
| Resource Shifting Indicator | 1 | 0 = No Resource Shifting |
| | | 1 = Resource Shifting |
| for (j=0; j<Number of sub bursts; j++) { | | |
| Allocation Flag | 1 | 1 = allocate |
| | | 0 = de-allocate |
| ... | | |
| if( Allocation Flag==0){ | | |
| RCID_IE() | Variable | |
| ... | | |
| if (Resource shifting indicator ==1) { | | |
| Duration (slot duration value) | variable | Duration in slots. OFDMA Frame duration dependant |
| | | 7 bits - 2.5 ms frame |
| | | 8 bits - 5 ms frame |
| | | 9 bits - 10 ms frame |
| | | 10 bits - 20 ms frame |
| Slot Offset | variable | Indicates the start of this persistent allocation in OFDMA slots, with respect to the lowest numbered OFDM symbol and the lowest numbered sub channel in the HARQ region. OFDMA Frame duration dependant |
| | | 7 bits - 2.5 ms frame |
| | | 8 bits - 5 ms frame |
| | | 9 bits - 10 ms frame |
| | | 10 bits - 20 ms frame |
| ... | | |
| } | | |
| ... | | |
| } | | |
| ... | | |
| } | | |
| ... | | |

The present invention will be described in detail in conjunction with the drawings hereinafter.

### The first method embodiment

A method for adjusting a persistent allocation of resource is provided in the present embodiment. The method can be used in a wireless communication system which comprises a base station and a terminal. The method for adjusting the persistent allocation of the resource according to the present embodiment comprises the following process:
the base station sending a resource persistent allocation message to the terminal via a downlink channel, wherein the base station indicates a resource de-allocation by a resource allocation flag in the resource persistent allocation message, and indicates whether a resource hole filling is needed by the resource shifting indicator in the resource persistent allocation message, wherein under the circumstance that the resource hole filling is needed, the location information of a de-allocated resource is carried in the resource persistent allocation message; and under the circumstance that no resource hole filling is needed, the identifier of the terminal is carried in the resource persistent allocation message.

In the specific implementation process, the base station can send, in the modes of broadcast, multicast, or unicast, the resource persistent allocation message to the terminal through a downlink channel, and indicate the terminal to perform the resource de-allocation.

Table 2 shows the situation after that the part of the contents of the Sub burst IE in the resource persistent allocation information elements are improved according to the method embodiment of the present invention. Compared with the Sub burst IE shown in Table 1, when the holes is needed to be filled in the mode of the persistent allocation of resource, it is possible that the Sub burst IE shown in Table 2 does not transmit the field of the terminal identifier (RCID_IE), so that the description overhead of a control message is saved.

In the resource persistent allocation message, the resource allocation flag can be used to indicate whether to perform the resource de-allocation (for example, flag=0 means performing the resource de-allocation); and a resource shifting indicator can be used to indicate whether the resource hole filling is needed (for example, indicator=0 means that no hole filling is needed, and indicator=1 means that the hole filling is needed).

**Table 2**

| Syntax | Size (bit) | Notes |
|---|---|---|
| N Sub burst | 4 | Number of sub-bursts in the 2D rectangular region is this field value plus 1 |
| Resource Shifting Indicator | 1 | 0 = No Resource Shifting |
| | | 1 = Resource Shifting |
| for ( j=0; j<Number of sub bursts; j++) { | | |
| Allocation Flag | 1 | 1 = allocate |
| | | 0 = de-allocate |
| ... | | |
| if( Allocation Flag == 0){ | | |
| if(Resource Shifting Indicator == 0) { | | |
| RCID IE() | variable | |
| ... | | |
| } | | |
| ... | | |
| if (Resource shifting indicator ==1) { | | |
| Duration | variable | Duration in slots. OFDMA Frame duration dependant |
| | | 7 bits - 2.5 ms frame |
| | | 8 bits - 5 ms frame |
| | | 9 bits - 10 ms frame |
| | | 10 bits - 20 ms frame |
| Slot Offset | variable | Indicates the start of this persistent allocation in OFDMA slots, with respect to the lowest numbered OFDM symbol and the lowest numbered sub channel in the HARQ region. OFDMA Frame duration dependant |
| | | 7 bits - 2.5 ms frame |
| | | 8 bits - 5 ms frame |
| | | 9 bits - 10 ms frame |
| | | 10 bits - 20 ms frame |
| ... | | |
| } | | |
| ... | | |
| } | | |
| ... | | |
| } | | |
| ... | | |

At the base station side, under the circumstance that the resource hole filling is needed (the resource allocation flag is 0, and the resource shifting indicator is 1), the base station carries the location of the de-allocated resource in the resource persistent allocation message, that is, the location of the de-allocated resource is indicated by the slot offset and the duration in the resource persistent allocation message.

Under the circumstance that no resource hole filling is needed (the resource allocation flag is 0, and the resource shifting indicator is 0), the base station carries the terminal identifier (RCID_IE) in the resource persistent allocation message.

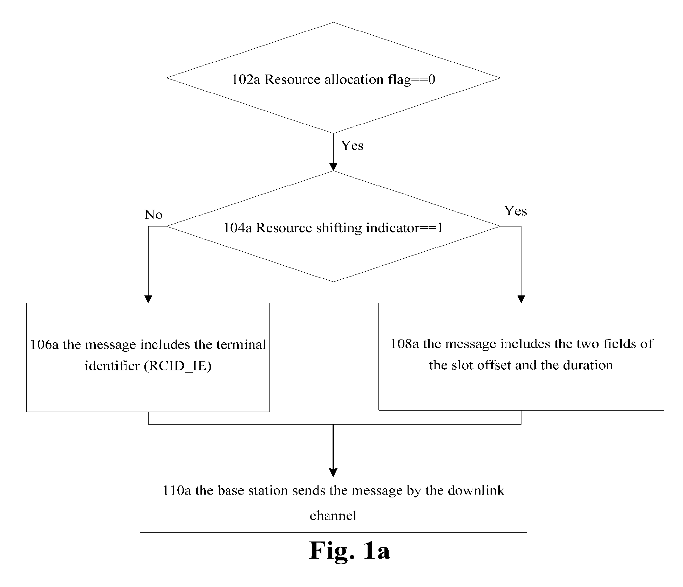

Fig.1a shows a flow chart for generating the Sub burst IE in the resource persistent allocation information elements by a base station in a mode shown in Table 2. As shown in Fig.1a, when the base station generates a resource persistent allocation message, the message should at least comprise the resource allocation flag and the resource shifting indicator.

Steps S102a-104a, if the resource allocation flag equals to 0 (indicating the resource de-allocation) and the resource shifting indicator equals to 0 (no hole filling is needed), step S106a will be executed; and if the resource allocation flag equals to 0 (indicating the resource de-allocation) and the resource shifting indicator equals to 1 (the hole filling is needed), step S108a will be executed.

Step S106a, the message includes the terminal identifier (RCID_IE).

Step S108a, the message includes the location corresponding to the de-allocated resource which is described by the two fields of the slot offset and the duration, and step S110a is executed.

Step S110a, the base station sends the message by the downlink channel.

Moreover, at the terminal side, the terminal receives the resource persistent allocation message sent by the base station, and judges whether the resource hole filling is needed according to the resource shifting indicator in the resource persistent allocation message.

Under the circumstance that it is judged that the resource hole filling is needed (the resource allocation flag is 0, and the resource shifting indicator is 1), the terminal determines whether the de-allocated resource includes the resource allocated to the terminal in a mode of the persistent allocation of the resource according to the location of the de-allocated resource carried in the resource persistent allocation message, wherein if yes, the terminal stops using the resource allocated to the terminal; otherwise, the terminal continues to use the resource allocated to the terminal.

Under the circumstance that it is judged that no resource hole filling is needed (the resource allocation flag is 0, and the resource shifting indicator is 0), the terminal judges whether the identifier (RCID_IE) carried in the resource persistent allocation message is the identifier of the present terminal, wherein if yes, the terminal stops using the resource allocated to the terminal; otherwise, the terminal continues to use the resource allocated to the terminal.

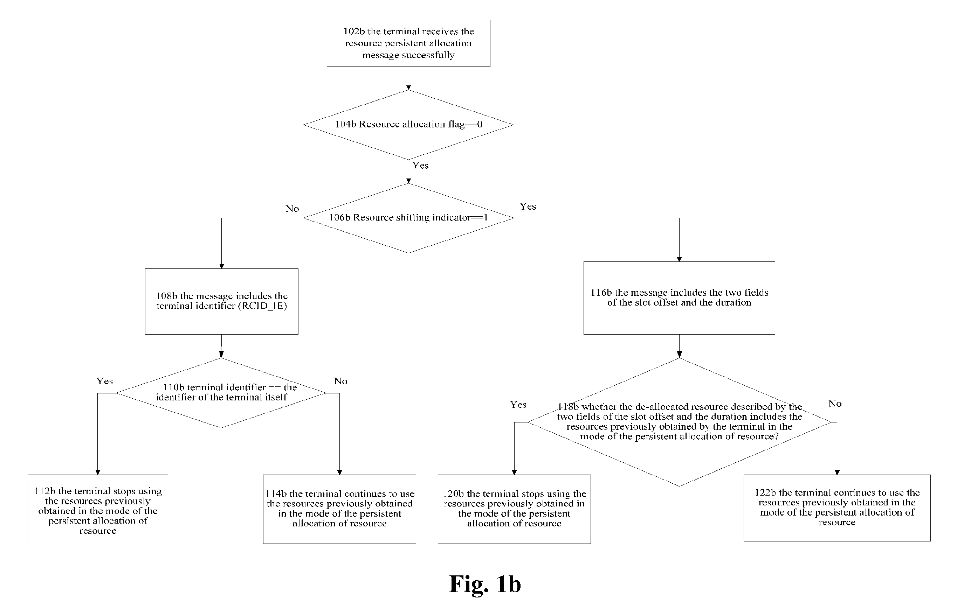

Fig.1b shows a flow chart for parsing the Sub burst IE in the resource persistent allocation information elements by a terminal in a mode shown in Table 2.

As shown in Fig.1b, step S102b is executed first; a terminal receives the resource persistent allocation message successfully; and steps S104b-S106b are executed.

Steps S104b-S106b, if the resource allocation flag equals to 0 (indicating the resource de-allocation) and the resource shifting indicator equals to 0 (no hole filling is needed), the step S108b will be executed; otherwise, step S116b will be executed.

Step S108b, the terminal obtains the terminal identifier (RCID_IE) contained in the message, and step S110b is executed.

Step S110b, if the terminal identifier of the terminal itself equals to the terminal identifier carried in the message, step S112b will be executed; otherwise, step S114b will be executed.

Step S112b, the terminal stops using the resources previously obtained in the mode of the persistent allocation of resource, and up to this point the flow is ended.

Step S114b, the terminal continues to use the resources previously obtained in the mode of the persistent allocation of resource, and up to this point, the flow is ended.

Step S116b, the terminal obtains the two fields of the slot offset and the duration contained in the message, and step S118b is executed.

Step S118b, if the de-allocated resource described by the two fields of the slot offset and the duration in the message includes the resources previously obtained by the terminal in the mode of the persistent allocation of resource, step S120b will be executed; otherwise, step S122b will be executed.

Step S120b, the terminal stops using the resources previously obtained in the mode of the persistent allocation of resource, and up to this point, the flow is ended.

Step S122b, the terminal continues to use the resources previously obtained in the mode of the persistent allocation of resource, and up to this point, the flow is ended.

By the above process, the user identifier can be omitted in the message under the circumstance that no hole filling is needed, so that the overhead is saved.

### The First Device Embodiment

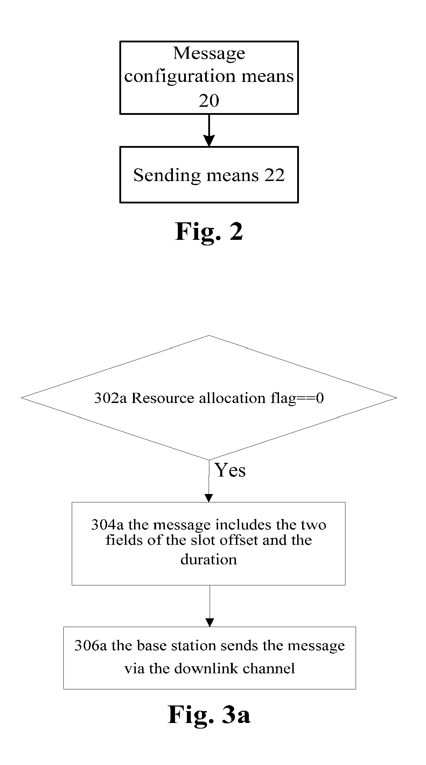

Fig.2 shows the structure of a base station according to the first device embodiment of the present invention. The base station can be used to perform a persistent allocation of the resource to a terminal in a wireless communication system. As shown in Fig.2, the base station according to the present embodiment comprises message configuration means 20 and sending means 22, wherein the message configuration means 20 is configured to indicate a resource de-allocation via carrying a resource allocation flag in a resource persistent allocation message, and to indicate whether a resource hole filling is needed via a resource shifting indicator in the resource persistent allocation message, wherein under the circumstance that the resource hole filling is needed, the location of de-allocated resource is carried in the resource persistent allocation message; and under the circumstance that no resource hole filling is needed, the identifier of the terminal is carried in the resource persistent allocation message. Preferably, the message configuration means 20 can perform a message configuration according to the above Table 2, and Fig.1a can be referred to for the configuration process;
the sending means 22 is configured to send the resource persistent allocation message to the terminal via a downlink channel.

### The Second Method Embodiment

A method for adjusting a persistent allocation of resource is provided in the present embodiment. The method can be used in a wireless communication system which comprises a base station and a terminal. The method for adjusting the persistent allocation of the resource according to the present embodiment comprises the following process: the base station sending a resource persistent allocation message to the terminal via a downlink channel, wherein the base station indicates a resource de-allocation by a resource allocation flag in the resource persistent allocation message, and carries location of the de-allocated resource in the resource persistent allocation message; wherein the above location information can be exact resource location information or rough resource location information, e.g. only comprising long transmit time interval (TTI) information which is used to indicate whether the de-allocated resource covers a plurality of time units.

The above process will be described in detail hereinafter.

In the specific implementation process, the base station can send, in the modes of broadcast, multicast or unicast, the resource persistent allocation message to the terminal through a downlink channel, and indicate the terminal to perform the resource de-allocation.

Table 3 shows the situation after that the part of the contents of the Sub burst IE in the resource persistent allocation information elements are improved according to the method embodiment of the present invention. Compared with the Sub burst IE shown in Table 1, when the hole filling is needed in the mode of the persistent allocation of resource, it is possible that the Sub burst IE shown in Table 3 does not transmit the field of the terminal identifier (RCID_IE), so that the description overhead of a control message is saved.

**Table 3**

| Syntax | Size (bit) | Notes |
|---|---|---|
| N Sub burst | 4 | Number of sub-bursts in the 2D rectangular region is this field value plus 1 |
| Resource Shifting Indicator | 1 | 0 = No Resource Shifting |
| | | 1 = Resource Shifting |
| for ( j=0; j<Number of sub bursts; j++) { | | |
| Allocation Flag | 1 | 1 = allocate |
| | | 0 = de-allocate |
| ... | | |
| if( Allocation Flag == 0){ | | |
| ... | | |
| Duration | variable | Duration in slots. OFDMA Frame duration dependant |
| | | 7 bits - 2.5 ms frame |
| | | 8 bits - 5 ms frame |
| | | 9 bits - 10 ms frame |
| | | 10 bits - 20 ms frame |
| Slot Offset | variable | Indicates the start of this persistent allocation in OFDMA slots, with respect to the lowest numbered OFDM symbol and the lowest numbered sub channel in the HARQ region. OFDMA Frame duration dependant |
| | | 7 bits - 2.5 ms frame |
| | | 8 bits - 5 ms frame |
| | | 9 bits - 10 ms frame |
| | | 10 bits - 20 ms frame |
| ... | | |
| } | | |
| ... | | |
| } | | |
| ... | | |

In the resource persistent allocation message, the resource allocation flag can be used to indicate whether to perform the resource de-allocation (for example, when the flag includes one bit, its value of 0 means performing the resource de-allocation; and when the flag includes two bits, its value of 00 means performing a persistent resource de-allocation); and the base station indicates the location of the de-allocated resource by the slot offset and the duration, and carries the slot offset and the duration in the resource persistent allocation message.

Fig.3a shows a flow chart for generating the Sub burst IE in the resource persistent allocation information elements by the base station in a mode shown in Table 3. As shown in Fig.3a, the base station sends the resource persistent allocation message through the downlink channel, and the message at least comprises the resource allocation flag.

Step S3202a is executed first, wherein it is judged whether the resource allocation flag equals to 0 (which indicates the resource de-allocation), wherein if yes, step S304a will be executed; otherwise, the flow is ended.

Step S304a, the message includes the location corresponding to the de-allocated resource which is described by the two fields of the slot offset and the duration, and step S306a is executed.

Step S306a, the base station sends the message through the downlink channel.

Moreover, at the terminal side, the terminal determines whether the de-allocated resource includes the resource allocated to the terminal in a mode of the persistent allocation of resource according to the location of the de-allocated resource carried in the resource persistent allocation message. That is to say, the terminal determines whether the de-allocated resource includes the resource allocated to the terminal according to the slot offset and the duration. If yes, the terminal stops using the resource allocated to the terminal; otherwise, the terminal continues to use the resource allocated to the terminal. Or the terminal stops using the corresponding persistent resource according to the location information of the de-allocated resource carried in the resource persistent allocation message.

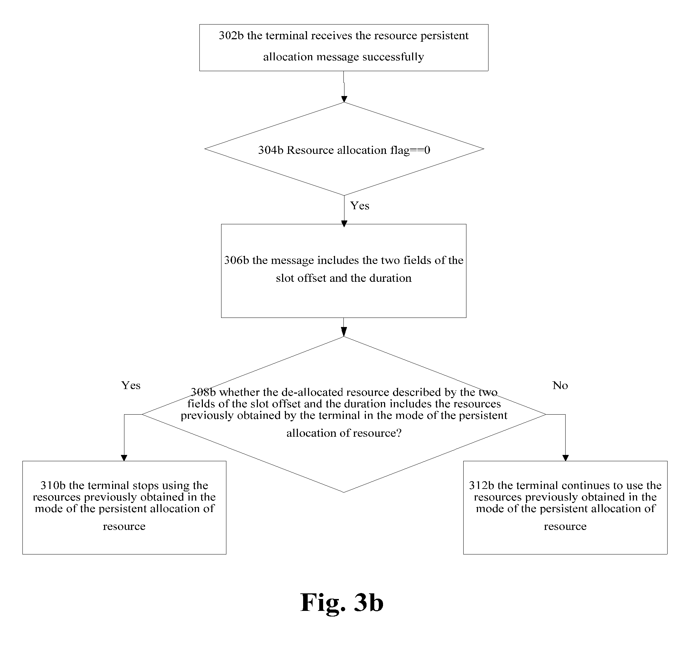

Fig.3b shows a flow chart for parsing the Sub burst IE in the resource persistent allocation information elements by the terminal in a mode shown in table 3.

As shown in Fig.3b, step S302b is executed first wherein the terminal receives the resource persistent allocation message successfully; and step S304b is executed.

Step S304b, it is judged whether the resource allocation flag equals to 0 (which indicates the resource de-allocation), wherein if yes, step S306b will be executed; otherwise, the flow is ended.

Step S306b, the terminal obtains the two fields of the slot offset and the duration contained in the message, and step S308b is executed.

Step S308b, it is judged whether the de-allocated resource described by the two fields of the slot offset and the duration in the message includes the resources previously obtained by the terminal in the mode of the persistent allocation of resource, wherein if yes, step S310b will be executed; otherwise, step S312b will be executed.

Step S310b, the terminal stops using the resources previously obtained in the mode of the persistent allocation of resource, and up to this point, the flow is ended.

Step S312b, the terminal continues to use the resources previously obtained in the mode of the persistent allocation of resource, and up to this point, the flow is ended.

It can be seen that the above process further saves the resource shifting indicator on the basis of the first method embodiment, so that the overhead of the system is further reduced.

### The Second Device Embodiment

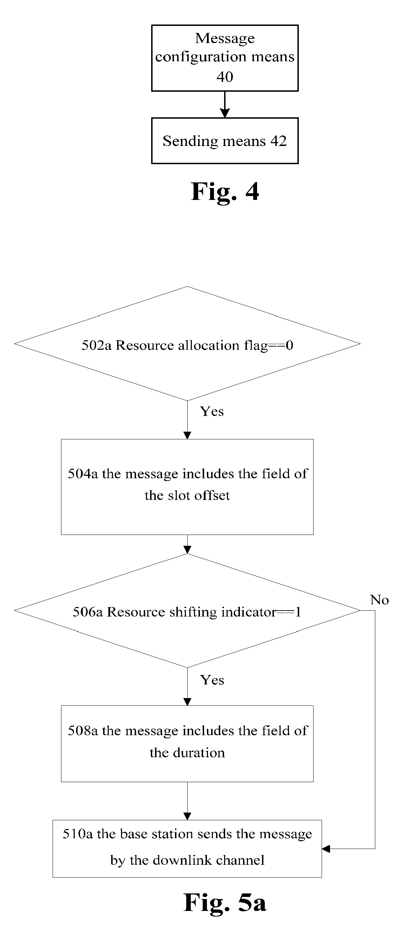

Fig.4 shows the structure of a base station according to the second device embodiment of the present invention. The base station is used to perform a persistent allocation of resource to a terminal in a wireless communication system. As shown in Fig.4, the base station according to the present embodiment comprises: message configuration means 40, which is configured to indicate a resource de-allocation by carrying a resource allocation flag in a resource persistent allocation message, and to carry the location of de-allocated resource in the resource persistent allocation message, in addition, which can perform a message configuration according to the above Table 3 with the configuration process based on Fig.3a; and
sending means 42, configured to send the resource persistent allocation message to the terminal via a downlink channel.

### The Third Method Embodiment

A method for adjusting a persistent allocation of resource is provided in the present embodiment. The method can be used in a wireless communication system which comprises a base station and a terminal. The method for adjusting a persistent allocation of resource according to the present embodiment comprises: the base station sending a resource persistent allocation message to the terminal via a downlink channel, wherein the base station indicates a resource de-allocation via a resource allocation flag in the resource persistent allocation message, indicates whether a resource hole filling is needed via a resource shifting indicator in the resource persistent allocation message, and carries a starting location of an allocated resource in the resource persistent allocation message, wherein under the circumstance that the resource hole filling is needed, a duration is carried in the resource persistent allocation message.

The above process will be described in detail hereinafter.

In the specific implementation process, the base station can send, in the modes of broadcast, multicast or unicast, the resource persistent allocation message to the terminal through a downlink channel, and indicate the terminal to perform the resource de-allocation.

Table 4 shows the situation after that the part of the contents of the Sub burst IE in the resource persistent allocation information elements are improved according to the method embodiment of the present invention. Compared with the Sub burst IE shown in Table 1, when the hole filling is needed in the mode of the persistent allocation of resource, it is possible that the Sub burst IE shown in Table 4 does not transmit the field of the RCID_IE, so as to save the description overhead of a control message.

**Table 4**

| Syntax | Size (bit) | Notes |
|---|---|---|
| N Sub burst | 4 | Number of sub-bursts in the 2D rectangular region is this field value plus 1 |
| Resource Shifting Indicator | 1 | 0 = No Resource Shifting |
| | | 1 = Resource Shifting |
| for ( j=0; j<Number of sub bursts; j++){ | | |
| Allocation Flag | 1 | 1 = allocate |
| | | 0 = de-allocate |
| ... | | |
| if( Allocation Flag == 0){ | | |
| ... | | |
| Slot Offset | variable | Indicates the start of this persistent allocation in OFDMA slots, with respect to the lowest numbered OFDM symbol and the lowest numbered sub channel in the HARQ region. OFDMA Frame duration dependant |
| | | 7 bits - 2.5 ms frame |
| | | 8 bits - 5 ms frame |
| | | 9 bits - 10 ms frame |
| | | 10 bits - 20 ms frame |
| ... | | |
| if (Resource shifting indicator ==1){ | | |
| Duration | variable | Duration in slots. OFDMA Frame duration dependant |
| | | 7 bits - 2.5 ms frame |
| | | 8 bits - 5 ms frame |
| | | 9 bits - 10 ms frame |
| | | 10 bits - 20 ms frame |
| ... | | |
| } | | |
| ... | | |
| } | | |
| ... | | |
| } | | |
| ... | | |

The base station indicates the resource de-allocation via the resource allocation flag in the resource persistent allocation message (for example, flag=0 means performing the resource de-allocation), indicates whether resource hole filling is needed (for example, the indicator=0 means that no hole filling is filled, and the indicator=1 means that the hole filling is needed), and carries the starting location of the allocated resource in the resource persistent allocation message. That is to say, the base station indicates the location of the de-allocated resource by the slot offset, and carries the slot offset in the resource persistent allocation message. Under the circumstance that the resource hole filling is needed (the resource allocation flag is 0, and the resource shifting indicator is 1), the duration is further carried in the resource persistent allocation message.

Fig.5a shows the flow chart for generating the Sub burst IE in the resource persistent allocation information elements by the base station in a mode shown in Table 4.

As shown in Fig.5a, step S502a is executed first; the base station sends the resource persistent allocation message via the downlink channel. The message at least comprises the resource allocation flag and the resource shifting indicator. First, it is judged whether the resource allocation flag equals to 0 (which indicates the resource de-allocation), wherein if yes, step S504a will be executed; otherwise, the flow is ended.

Step S504a, the message includes the field of the slot offset, and step S506a is executed.

Step S506a, under the circumstance of judging the resource allocation flag equals to 0 (which indicates the resource de-allocation), it is judged whether the resource shifting indicator equals to 1 (which indicates that the hole filling is needed), wherein if yes, step S508a will be executed; otherwise, step S510a will be executed.

Step S508a, the message includes the duration, and step S510a is executed.

Step S510a, the base station sends the message via the downlink channel.

Furthermore, at the terminal side, the terminal receives the resource persistent allocation message sent by the base station, and judges whether the starting location of the de-allocated resource is identical to the starting location of a resource allocated to the terminal in a mode of the persistent allocation of resource. That is to say, the terminal determines whether the starting location of the de-allocated resource is identical to that of the resource allocated to the terminal according to the slot offset. If yes, the terminal stops using the resource allocated to the terminal; otherwise, the terminal continues to use the resource allocated to the terminal. Besides, the resource shifting indicator in the resource persistent allocation message is used to indicate whether the resource hole filling is needed; under the circumstance that the resource hole filling is needed (e.g. the indicator is 1), other terminals which allocated resources is located after the above de-allocated resource can perform the resource hole filling according to the duration carried in the resource persistent allocation message.

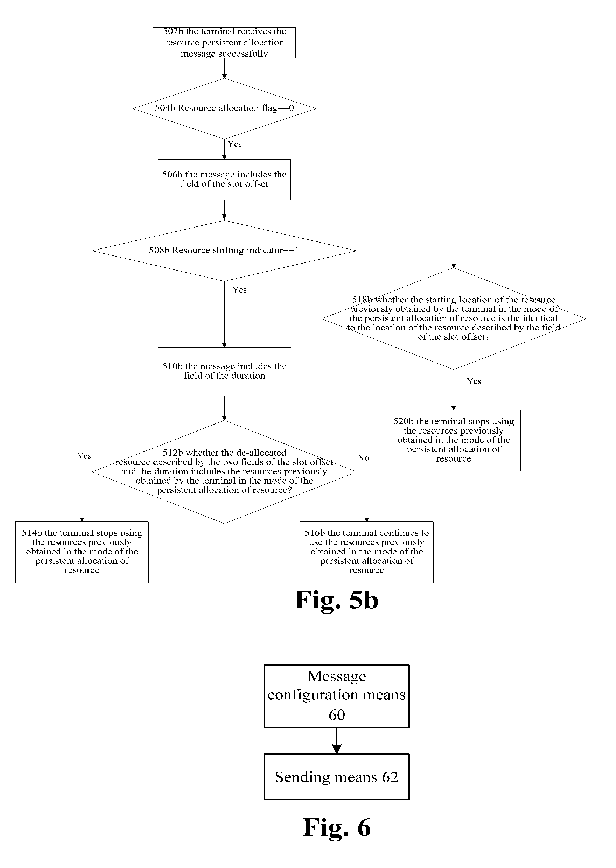

Fig.5b shows a flow for analyzing the Sub burst IE in the resource persistent allocation information elements by the terminal in a mode shown in Table 4.

As shown in Fig.5b, step S502b is executed first wherein the terminal receives the resource persistent allocation message successfully; and step S504b is executed.

Step S504b, it is judged whether the resource allocation flag equals to 0 (which indicates the resource de-allocation), wherein if yes, step S506b will be executed.

Step S506b, the terminal obtains the field of the slot offset contained in the message, and step S508b is executed.

Step S508b, it is judged whether the resource shifting indicator equals to 1; i.e., whether resource holes need to be filled, wherein if yes, step S510b will be executed; otherwise, step S518b will be executed.

Step S510b, the terminal obtains the field of the duration in the message, and step S512b is executed.

Step S512b, it is judged whether the de-allocated resource described by the two fields of the slot offset and the duration in the message includes the resources previously obtained by the terminal in the mode of the persistent allocation of resource, wherein if yes, step S514b will be executed; otherwise, step S516b will be executed.

Step S514b, the terminal stops using the resources previously obtained in the mode of the persistent allocation of resource, and up to this point the flow is ended.

Step S516b, the terminal continues to use the resources previously obtained in the mode of the persistent allocation of resource, and up to this point, the flow is ended.

Step S518b, it is judged whether the starting location of the resource previously obtained by the terminal in the mode of the persistent allocation of resource is the identical to the location of the resource described by the slot offset field, wherein if yes, step S502b will be executed; otherwise, the flow is ended.

Step S520b, the terminal stops using the resources previously obtained in the mode of the persistent allocation of resource.

It can be seen from the above description that the process according to the present embodiment saves the duration on the basis of the first method embodiment, so that the overhead of the system is further reduced.

### The Third Device Embodiment

A base station is provided in the present embodiment. The base station is used to perform a persistent allocation of resource to a terminal in a wireless communication system. As shown in Fig.6, the base station according to the present embodiment comprises: message configuration means 60, which is configured to indicate a resource de-allocation via carrying a resource allocation flag in a resource persistent allocation message, to indicate whether a resource hole filling is needed by a resource shifting indicator in the resource persistent allocation message, and to carry the starting location of an allocated resource in the resource persistent allocation message, wherein under the circumstance that the resource hole filling is needed, a duration is further carried in the resource persistent allocation message; in addition, the message configuration means 60 can perform a message configuration according to the above Table 4, with the configuration based on Fig.5a; and
sending means 62, configured to send the resource persistent allocation message to the terminal via a downlink channel.

To sum up, in virtue of the technical solution of the present invention, the information such as the terminal identifier becomes the optional carried information, by modifying the content carried in the resource persistent allocation message, therefore, the redundant content in the message is eliminated, the problem that the efficiency of the system frequency spectrum is reduced due to the redundant content in the message is avoided, system resources are saved, and the performances and the efficiency of the system frequency spectrum are improved.

Above description is only to illustrate the preferred embodiments but not to limit the present invention. Various alterations and changes to the present invention are apparent to those skilled in the art. The scope defined in claims shall comprise any modification, equivalent substitution and improvement within the principle of the present invention.

## Claims

1. A method for adjusting a persistent allocation of resource, which is used in a wireless communication system which comprises a base station and a terminal, the method comprising:
the base station sending a resource persistent allocation message to the terminal via a downlink channel (102b) wherein the base station indicates a resource de-allocation by a resource allocation flag (104b) in the resource persistent allocation message, and indicates whether a resource hole filling is needed by the resource shifting indicator (106b) in the resource persistent allocation message, wherein under the circumstance that the resource hole filling is needed, the location of a de-allocated resource is carried in the resource persistent allocation message (116b); and under the circumstance that no resource hole filling is needed, the identifier of the terminal is carried in the resource persistent allocation message (108b).

2. The method according to Claim 1, **characterized in that** the method further comprises:
the terminal receiving the resource persistent allocation message sent by the base station, and judging whether the resource hole filling is needed according to the resource shifting indicator in the resource persistent allocation message; wherein under the circumstance that the resource hole filling is needed, the terminal determines whether the de-allocated resource includes the resource allocated to the terminal in a mode of the persistent allocation of the resource according to the location of the de-allocated resource carried in the resource persistent allocation message, wherein if yes, the terminal stops using the resource allocated to the terminal; otherwise, the terminal continues to use the resource allocated to the terminal; and under the circumstance that no resource hole filling is needed, the terminal judges whether the identifier carried in the resource persistent allocation message is the identifier of the terminal, wherein if yes, the terminal stops using the resource allocated to the terminal; otherwise, the terminal continues to use the resource allocated to the terminal;
preferably, the processing that the base station carries the location of the de-allocated resource in the resource persistent allocation message comprises: the base station representing the location of the de-allocated resource via a slot offset and a duration, and carries the slot offset and the duration in the resource persistent allocation message.

3. The method according to Claim 2, **characterized in that** the processing that the terminal determines whether the de-allocated resource includes the resource allocated to the terminal in the mode of the persistent allocation of the resource according to the location of the de-allocated resource carried in the resource persistent allocation message comprises:
the terminal determining whether the de-allocated resource includes the resource allocated to the terminal according to the slot offset and the duration.

4. The method according to any one of Claims 1-3, **characterized in that** the base station sends the resource persistent allocation message in one of the following modes: broadcast, multicast, and unicast.

5. A base station, which is used to perform a persistent allocation of resource to a terminal in a wireless communication system, the base station comprising:
message configuration means, configured to indicate a resource de-allocation via carrying a resource allocation flag (104b) in a resource persistent allocation message, and to indicate whether a resource hole filling is needed via a resource shifting indicator (106b) in the resource persistent allocation message (116b), wherein under the circumstance that the resource hole filling is needed, the location of de-allocated resource is carried in the resource persistent allocation message; and under the circumstance that no resource hole filling is needed, the identifier of the terminal is carried in the resource persistent allocation message; and
sending means, configured to send the resource persistent allocation message to the terminal via a downlink channel (102b).

## Patentansprüche

1. Verfahren zur Anpassung einer permanenten Ressourcenzuweisung, die in einem drahtlosen Kommunikationssystem verwendet wird, das eine Basisstation und eine Endstation aufweist, umfassend die folgenden Schritte: Die Basisstation sendet eine permanente Ressourcenzuweisungsbotschaft an die Endstation über einen Downlink, wobei die Basisstation durch eine Ressourcenzuweisungsmarkierung eine Ressourcenabweisung in der permanenten Ressourcenzuweisungsbotschaft anzeigt und des weiteren anzeigt, ob eine Ressourcenlochfüllung durch den Ressourcenschubindikator in der ressourcenpermanenten Zuweisungsbotschaft benötigt wird, wobei dann, wenn die Ressourcenlochfüllung benötigt wird, die Lage einer Abweisungsressource in der permanenten Ressourcenzuweisung ermittelt wird und für den Fall, daß keine Ressourcenlochfüllung erforderlich ist, die Identifikation der Endstation in der permanenten Ressourcenzuweisungsbotschaft durchgeführt wird.

2. Verfahren nach Anspruch 1, ferner **gekennzeichnet durch** die folgenden Schritte: Die Endstation empfängt die permanente Ressourcenzuweisungsbotschaft **durch** die Basisstation, und es wird beurteilt, ob die Ressourcenlochfüllung gemäß dem Ressourcenschubindikator in der permanenten Ressourcenzuweisungsbotschaft benötigt wird, wobei für den Fall, daß die Ressourcenlochfüllung erforderlich ist, die Endstation bestimmt, ob die Ressourcenabweisung die Ressourcenzuweisung zu der Endstation enthält, und zwar in einer Weise, bei der die permanente Ressourcenzuweisung gemäß der Lage der Ressourcenabweisung in der permanenten Ressourcenzuweisungsbotschaft enthalten ist, wobei, falls ja, die Endstation unter Verwendung der Ressourcenzuweisung zu der Endstation stoppt und anderenfalls die Endstation die Verwendung der der Endstation zugewiesenen Ressource weiterführt und für den Fall, daß keine Ressourcenlochfüllung erforderlich ist, die Endstation beurteilt, ob die in der permanenten Ressourcenzuweisungsbotschaft enthaltene Kennung die Kennung der Endstation ist, wobei, falls ja, die Endstation die Verwendung der der Endstation zugewiesenen Ressource stoppt und andererseits die Endstation die Verwendung der der Endstation zugewiesenen Ressource fortsetzt, wobei vorzugsweise das Verfahren so verläuft, daß die Basisstation die Lage der abweisenden Ressource in der permanenten Ressourcenzuweisungsbotschaft enthält und folgendes umfaßt: Die Basisstation stellt die Lage der abgewiesenen Ressource über einen Slotversatz und eine Dauer dar und beinhaltet den Slotversatz sowie die Dauer in der permanenten Ressourcenzuweisungsbotschaft.

3. Verfahren nach Anspruch 2, **dadurch gekennzeichnet, daß** der Bearbeitungsschritt, daß die Endstation bestimmt, ob die abgewiesene Ressource die Ressource aufweist, welche der Endstation in der Art der permanenten Zuweisung der Ressource zugewiesen ist, und zwar gemäß der Lage der abgewiesenen Ressource, die in der permanenten Zuweisungsressourcenbotschaft enthalten ist, umfassend den Schritt, daß die Endstation bestimmt, ob die abgewiesene Ressource die Ressource enthält, die der Endstation zugewiesen ist, und zwar gemäß dem Slotversatz und der Dauer.

4. Verfahren nach einem der Ansprüche 1 bis 3, **dadurch gekennzeichnet, daß** die Basisstation die Botschaft der permanenten Ressourcenzuweisung auf eine der folgenden Arten sendet: Rundfunk, Mehrkanal und Einkanal.

5. Basisstation, die dazu dient, eine permanente Ressourcenzuweisung an eine Endstation eines drahtlosen Kommunikationssystems durchzuführen, wobei die Basisstation folgendes aufweist: Eine BotschaftskonfigurationsEinrichtung, die so gebaut ist, daß über eine Ressourcenzuweisungsmarkierung eine Ressourcenabweisung erfolgt, und zwar in einer permanenten Ressourcenzuweisungsbotschaft, und um anzuzeigen, ob eine Ressourcenlochfüllung über einen Ressourcenschubindikator benötigt wird, und zwar bei der permanenten Ressourcenzuweisung, wobei für den Fall, daß die Ressourcenlochfüllung benötigt wird, die abgewiesene Ressource in der permanenten Zuweisungsbotschaft enthalten ist und für den Fall, daß keine Ressourcenlochfüllung benötigt wird, die Kennung der Endstation in der permanenten Ressourcenzuweisungsbotschaft enthalten ist, und schließlich umfassend eine Vorrichtung, die so gestaltet ist, daß die permanente Ressourcenzuweisungsbotschaft an die Endstation über einen Downlink gesendet wird.

## Revendications

1. Procédé pour ajuster une affectation persistante de ressource, qui est utilisé dans un système de communication sans fil qui comprend une station de base et un terminal, le procédé comprenant :
la station de base envoyant un message d'affectation persistante de ressource au terminal via un canal de liaison descendante (102b), où la station de base indique une désaffectation de ressource par un drapeau d'affectation de ressource (104b) dans le message d'affectation persistante de ressource, et indique si un remplissage de trou de ressource est nécessaire par l'indicateur de déplacement de ressource (106b) dans le message d'affectation persistante de ressource, où dans le cas où le remplissage de trou de ressource est nécessaire, l'emplacement d'une ressource désaffectée est acheminé dans le message d'affectation persistante de ressource (116b) ; et dans le cas où aucun remplissage de trou de ressource n'est nécessaire, l'identificateur du terminal est acheminé dans le message d'affectation persistante de ressource (108b).

2. Procédé selon la revendication 1, **caractérisé en ce que** le procédé comprend en outre :
le terminal recevant le message d'affectation persistante de ressource envoyé par la station de base, et jugeant si le remplissage de trou de ressource est nécessaire selon l'indicateur de déplacement de ressource dans le message d'affectation persistante de ressource ; où dans le cas où le remplissage de trou de ressource est nécessaire, le terminal détermine si la ressource désaffectée inclut la ressource affectée au terminal dans un mode de l'affectation persistante de la ressource selon l'emplacement de la ressource désaffectée acheminé dans le message d'affectation persistante de ressource, où si oui, le terminal arrête d'utiliser la ressource affectée au terminal ; sinon, le terminal continue à utiliser la ressource affectée au terminal ; et dans le cas où aucun remplissage de trou de ressource n'est nécessaire, le terminal juge si l'identificateur acheminé dans le message d'affectation persistante de ressource est l'identificateur du terminal, où si oui, le terminal arrête d'utiliser la ressource affectée au terminal ; sinon, le terminal continue à utiliser la ressource affectée au terminal ;
de préférence, le traitement selon lequel la station de base achemine l'emplacement de la ressource désaffectée dans le message d'affectation persistante de ressource comprend : la station de base représentant l'emplacement de la ressource désaffectée via un décalage de créneau et une durée, et achemine le décalage de créneau et la durée dans le message d'affectation persistante de ressource.

3. Procédé selon la revendication 2, **caractérisé en ce que** le traitement selon lequel le terminal détermine si la ressource désaffectée inclut la ressource affectée au terminal dans le mode de l'affectation persistante de la ressource selon l'emplacement de la ressource désaffectée acheminé dans le message d'affectation persistante de ressource comprend :
le terminal déterminant si la ressource désaffectée inclut la ressource affectée au terminal selon le décalage de créneau et la durée.

4. Procédé selon l'une quelconque des revendications 1 à 3, **caractérisé en ce que** la station de base envoie le message d'affectation persistante de ressource dans un des modes suivants : diffusion, multidiffusion, et unidiffusion.

5. Station de base, qui est utilisée pour effectuer une affectation persistante de ressource à un terminal dans un système de communication sans fil, la station de base comprenant :
des moyens de configuration de message, configurés pour indiquer une désaffectation de ressource via l'acheminement d'un drapeau d'affectation de ressource (104b) dans un message d'affectation persistante de ressource, et pour indiquer si un remplissage de trou de ressource est nécessaire via un indicateur de déplacement de ressource (106b) dans le message d'affectation persistante de ressource (116b), où dans le cas où le remplissage de trou de ressource est nécessaire, l'emplacement de ressource désaffectée est acheminé dans le message d'affectation persistante de ressource ; et dans le cas où aucun remplissage de trou de ressource n'est nécessaire, l'identificateur du terminal est acheminé dans le message d'affectation persistante de ressource ; et
des moyens d'envoi, configurés pour envoyer le message d'affectation persistante de ressource au terminal via un canal de liaison descendante (102b).
